# EUROPEAN PATENT SPECIFICATION

(11) **EP 2 785 630 B1**
(45) Date of publication and mention of the grant of the patent: **29.07.2020**
(21) Application number: 12805626.4
(22) Date of filing: 27.11.2012
(51) Int. Cl.: B66C 23/44, B66C 23/86, B66C 23/94

(54) **DEVICE FOR LOCKING A SLEWABLE ARM OF A CRANE OR MOWING MACHINE ON A VEHICLE**
VORRICHTUNG ZUM BEFESTIGEN EINES SCHWENKBAREN BÜGELS EINES KRANS ODER EINER MÄHMASCHINE AN EINEM FAHRZEUG
DISPOSITIF DE VERROUILLAGE D'UN BRAS PIVOTANT D'UNE GRUE OU D'UNE MACHINE DE FAUCHAGE SUR UN VÉHICULE

(30) Priority: 28.11.2011 BE 201100693
(43) Date of publication of application: 08.10.2014
(73) Proprietor: SCHOTS TECHNICS, 3545 Halen (BE)
(72) Inventor: SCHOTS, Roeland, B-3540 Herk-De-Stad (BE)
(74) Representative: Brantsandpatents bvba
(86) International application number: PCT/EP2012/073735
(87) International publication number: WO 2013/079484

(56) References cited:
- EP-A1- 1 418 152
- CA-B- 1 065 804
- CN-Y- 201 296 613
- DE-A1- 19 605 879
- US-A- 4 064 997
- US-A- 4 411 070
- US-A- 5 402 898

## Description

### TECHNICAL SCOPE OF THE INVENTION

The present invention relates to a device for locking a slewable arm of a crane or mowing machine which is mountable or mounted on a vehicle. The tap may be slewable about a vertical shaft.

### STATE OF THE ART

Slewable arms of cranes or mowing machines on vehicles are used for countless applications and in many devices, e.g. for loading and unloading goods, for handling long timber such as tree trunks, for clearing ditches, mowing grass verges, etc.

The patent NL 1025137 discloses a loading system for heavy goods vehicles with a loading platform that is ideal for trucks, as well as a crane for use in such a loading system.

EP 1 418 152 describes a vehicle with a superstructure which can be retained in a selected angular position. JP 2002-302971 describes a construction machine whereby the upper rotating body can be secured with respect to the lower traveling body. JP H07 48859 shows a device to surely fix an upper revolving superstructure to a frame such as a lower travel body at an optional revolution position with no backlash. JP H09 142787 discloses a technology to fine-tune the swing position of an upper revolving superstructure by a swing lever. CA 1065804 describes hoists or cranes of the type mounted on a truck body, for loading or unloading the truck, and in particular to an improved rotation means for rotating the vertical support column which supports the boom of the crane or hoist. BE1017636 describes a device for clearing ditches.

One problem with slewable arms on vehicles is that very large forces are often exerted on the slewing ring of the machine. This gives rise to relatively rapid wear, thus considerably reducing the life of the slewing ring.

### SUMMARY OF THE INVENTION

Embodiments according to the invention solve one or more problems on slewable arms of prior art on vehicles; these problems relate, but are not limited, to service life and safety.

Said problems are solved by a device for locking a slewable arm of a crane or mowing machine which is mountable or is mounted on a vehicle, according to the independent claim 1.

The invention may be used, among other things, in machines for the loading and unloading of goods, for the handling of long timber such as tree trunks, for the clearing of ditches and for the mowing of grass verges. The invention may also be used on standard excavation machines, on tracks or tyres.

### BRIEF DESCRIPTION OF THE FIGURES

Fig. 1 is a diagrammatic elevation of a device for clearing ditches, wherein a slewable crane is used on a vehicle.
Fig. 2 is a diagrammatic elevation of a drive of a slewing ring for a slewable crane.
Fig. 3a is a diagrammatic side view of an embodiment according to the invention of a device which comprises means for locking a slewable crane.
Fig. 3b is a diagrammatic side view of another embodiment according to the invention of such a device.
Fig. 3c is a diagrammatic representation of a cross-section of a disc brake.
Fig. 4 is a representation of a truck on which a slewable crane is mounted.
Fig. 5 is a representation of a slewable crane.

In the figures the same reference numbers refer to the same or similar elements.

### EMBODIMENTS

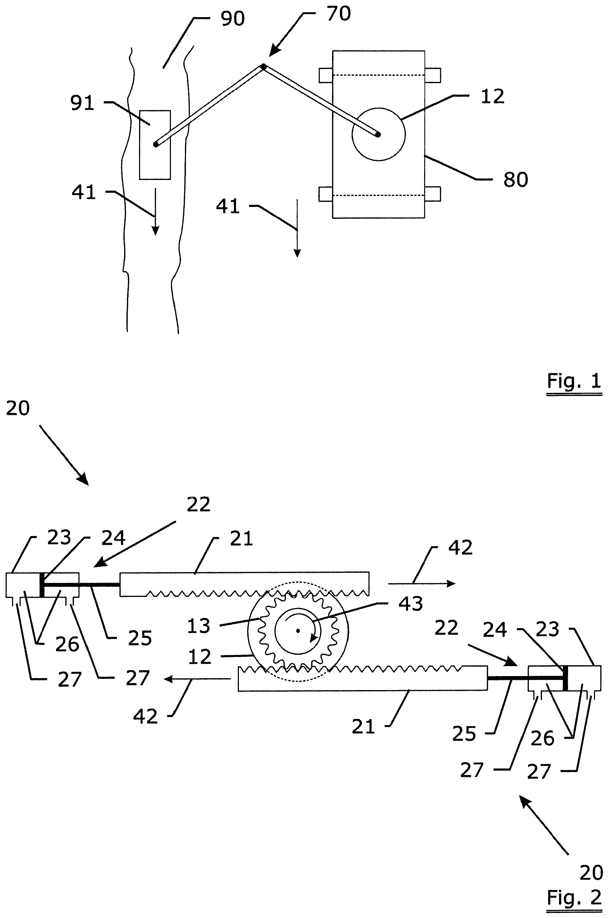

Fig. 1 illustrates diagrammatically one of the possible applications of the invention. Fig. 1 is a diagrammatic elevation of a device for clearing ditches. A vehicle 80 moves in the direction of arrow 41 adjacent to ditch 90, and is moved in the direction of arrow 41 through ditch 90. A collecting element 91 is secured to a slewable arm 70 on vehicle 80 and is moved in the direction of arrow 41 through ditch 90. Collecting element 91 collects material which is cleared from ditch 90, and this is discharged to the collecting bucket which may be located, for example, on vehicle 80 or which can e drawn, for example, by this vehicle. Such a device for clearing ditches is disclosed, for example, in the patent BE1017636. Arm 70 is able to rotate about a slewing ring 12 on vehicle 80. In Fig. 1 the shaft of slewing ring 12 is vertical. In such a device of prior art the clearing of a ditch exerts considerable forces on slewing ring 12, and also when vehicle 80 travels with arm 70, e.g. on the way to a ditch to be subsequently cleared large forces act on slewing ring 12.

Arm 70 is an arm of a crane, which might also be called 'crane' but it could also be an arm of a mowing machine.

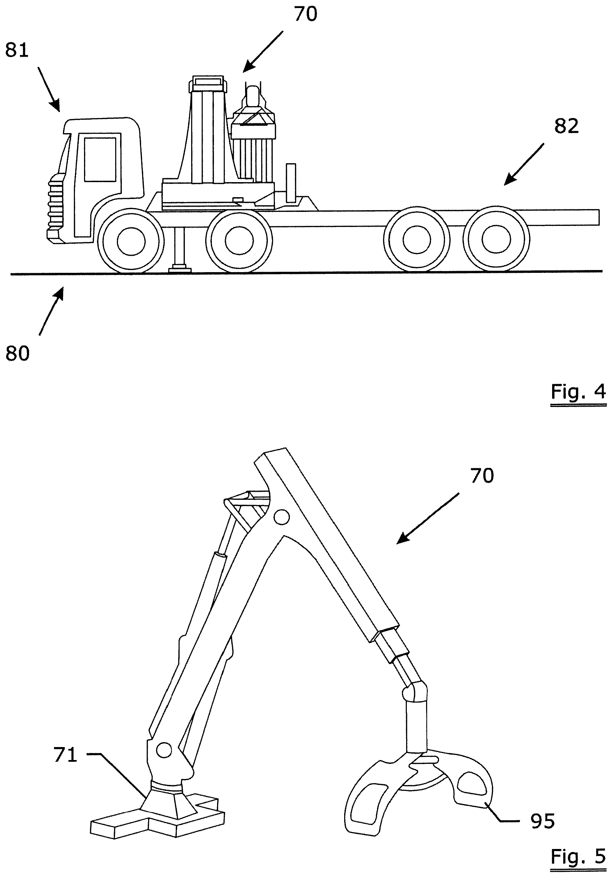

A detailed illustration of a slewable crane 70 can be found in Fig. 5, albeit for an application other than the clearing of ditches. Fig. 4 is a representation of a truck 80 on which a crane 70 is mounted behind cab 81 and which is also used for a different application, e.g. for loading and unloading material into a bucket which can be placed on loading platform 82.

Fig. 2 represents diagrammatically an elevation of an embodiment of a possible drive 20 of a slewing system 12, in this case a slewing ring 12 which is also represented diagrammatically here). In this embodiment, which in practice is used very frequently, a toothed wheel 13 is coupled to slewing ring 12 and two gear racks 21 (also called toothed racks engage in toothed wheel 13. The gear racks are driven by a hydraulic system 22; in the embodiment in Fig. 2 this hydraulic system 22 comprises two hydraulic cylinders 23, one for each gear rack 21. Liquid is supplied and discharged via the inlet and outlet ports 27 of each cylinder 23 respectively, as a result of which piston 24 is displaced in cylinder 23 and, via piston rod 25, drives gear rack 21 coupled to piston rod 25. When gear racks 21 move in the direction of the corresponding arrows 42, slewing ring 12 rotates in the direction of arrow 43.

Instead of two gear racks 21, as in the embodiment shown in Fig. 2, one single gear rack or more than two gear racks may also be used for driving slewing ring 12.

A type of drive 20 other than a toothed wheel or gear rack may also be used for slewing ring 12 or, generally, for slewing system 12. For example, one or more toothed belts can be used, particularly for smaller devices with smaller forces. A chain wheel and one or more chains may also be used as drive 20, possibly driven by a hydraulic motor. Even if a toothed wheel is used, the drive may comprise a hydraulic motor. The hydraulic motor may then also act as a brake.

One problem with a drive 20 as illustrated in Fig. 2 is that the drive is used for most of the time within a limited range; in most cases the same teeth of toothed wheel 13 and gear racks 21 are loaded in the embodiment shown in Fig. 2. For example, in the application illustrated in Fig. 1, clearing ditches, the distance from the vehicle to the ditch only varies to a limited degree, and the angle which crane 70 forms between vehicle 80 and ditch 90 varies very little either during clearing. However, the forces generated are very high. It is therefore established that drive 20 - in the case of Fig. 2 gear racks 21, but particularly toothed wheel 13 of slewing crane 12 - is highly susceptible to wear locally.

This applies not only to the toothed wheel and the gear rack drive in the embodiment of Fig. 2, and does not apply either if slewing system 12 comprises a slewing crane. Even if the slewing system comprises, for example, a toothed wheel on a vertical shaft which rotates in bearings, as applied in small truck cranes, this toothed wheel is highly susceptible to wear locally.

However, it is very expense to replace slewing system 12, and particularly a slewing ring 12.

In embodiments of a device according to the invention the rotation of the slewing system is therefore locked for a good deal of the time. In embodiments device 10 comprises locking means 30 for this purpose. Locking means 30 are adapted to lock the rotation of slewing system 12, e.g. relative to a foot 11 of device 10 which is firmly secured, during the operation of the device, to vehicle 80 on which slewable crane 70 is located. The rotation of slewing system 12 is preferably locked independently of drive 20 of the slewing system, as illustrated in greater detail below. As a result of this hardly any force is transferred via the drive of the slewing ring; in the embodiment in Fig. 2 hardly any force is therefore transferred via toothed wheel 13.

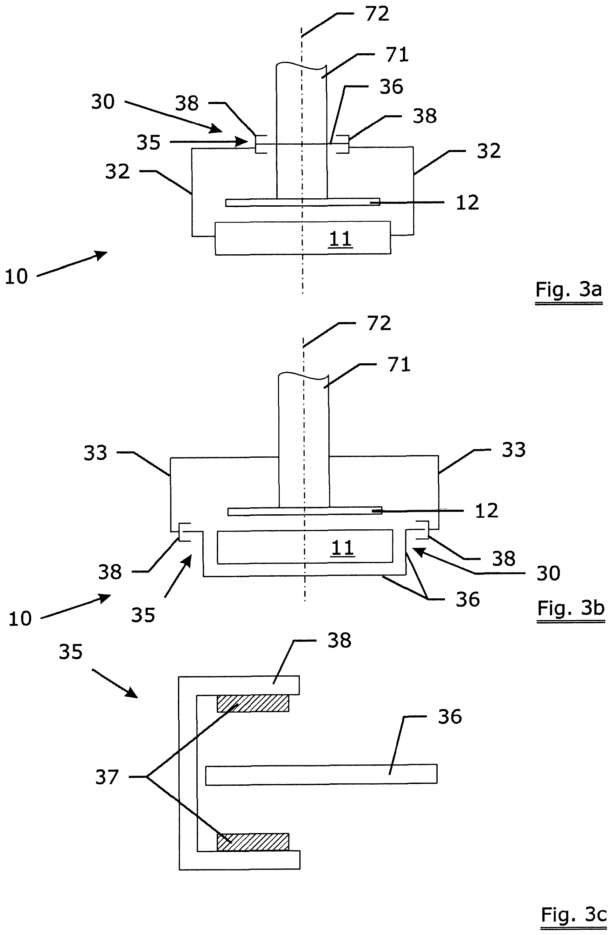

In the embodiment whose side view is diagrammatically represented in Fig. 3a, these locking means 30 comprise a disc brake 35 in order to lock the rotation of slewing system 12. In this embodiment disc brake 35 (see also Fig. 3c) comprises a brake disc 36 and brake blocks 37, i.e. two brake blocks 37 per calliper 38. Brake disc 36 is coupled to a pivot column 71 of the crane, e.g. by means of a mechanical connection. Pivot column 71 is coupled to slewing system 12, e.g. by means of a mechanical connection, and rotates, as crane 70, about shaft 72, together with slewing system 12. Brake blocks 37 in callipers 38 are coupled to foot 11, e.g. by one or more mechanical connections 32 between callipers 38 and foot 11. When brake blocks 37 are pressed against brake disc 36 slewing system is connected to foot 11, thereby locking the rotation of slewing system 12. The force between vehicle 80 and crane 70 is then transferred by disc brake 35; i.e. from foot 11 via disc brake 35 and pivot column 71 to crane 70. Locking means 30 (disc brake 35 in the embodiment in Fig. 3a) are independent of drive 20 of slewing system 12: the force acting on crane 70 is transferred via locking means 30 and hardly any further force is transferred via drive 20 - these are two parallel force paths.

In order to reduce the residual force via drive 20 still further the drive may also be placed in a so-called "swimming position". In the embodiment in Fig. 2 this can be achieved by interconnecting the inlet and outlet ports 27 opening to chambers 26 on both sides of piston 24 of hydraulic cylinder 23. In this "swimming position" piston 24 of hydraulic cylinder 23 is no longer under pressure. As a result of this, in the embodiment in Fig. 2, the force acting on the teeth of toothed wheel 13 is reduced to almost zero.

In an embodiment slewing system 12 is locked by locking means 30 when crane 70 is not being operated. A prior art method of operating a crane 70 involves the use of a joystick. In a particular embodiment slewing system 12 is locked when the joystick is not operated by the operator of the crane (i.e. when the joystick is in its neutral position, for example). A device 10 according to the invention may comprise actuating means for actuating locking means 30, the actuating means being adapted to actuate the locking means when the joystick is in the non-operation position, or generally when operating means for operating crane 70 are not operated by the operator.

In the ditch clearing application, described by means of Fig. 1, the operator will not be operating the joystick, or generally the operating means of crane 70 for a great deal of the time; he does so only if he wants to make an adjustment or correction. If a device 10 is used with locking means 30 according to the invention, only small forces are therefore exerted on slewing system 12 for a long time so that wear is substantially reduced.

An important advantage of a device with such a locking system is therefore a much longer service life.

It is not only during operation (e.g. clearing of ditches, handling of long timber, etc.) the locking mans can be activated; this is also possible when vehicle 80 is travelling, e.g. on the way to the next task. In this case the drive can also be placed in the "swimming position".

An additional advantage of embodiments according to the invention is an increase in safety: when the crane is locked it will remain in the same position, even in the case of unexpected shocks and the like (e.g. during travel) .

The locking means may be designed as a "negative brake" or as a "negatively locked brake": in the position of rest they lock the slewing system, and when the device or the crane is operated, the locking means are unlocked (in the embodiment with a disc brake the brake blocks then become detached from the brake disc so that brake disc is able to rotate). The advantage of this is increased safety. For example, if the drive of the slewing system comprises a hydraulic system, the slewing system, and hence the crane, is also locked even in the event of a defect on this hydraulic system - such as a leak in a pipe. In a classical system the crane is able to move from all sides in the case of certain defects, which can be extremely dangerous; in embodiments of the invention the crane is locked in such a case.

A further advantage is that in certain applications, e.g. clearing ditches (for this see also Fig. 1), the locking means can be designed in such a manner that the crane is retained in its position, in other words the angular position of crane 70 relative to vehicle 80 remains constant during operation, even if large forces are exerted on the crane - which may be the case, for example, when clearing ditches. In an embodiment the adjustment of the locking means is such that slewing system 12 for the crane can still rotate from a given, very large force acting on the locking means. If, when clearing ditches, for example, collecting element 91 impacts against a major obstruction, damage to the system is prevented or considerably limited. Such an adjustment of the locking means is dependent on the application of the device (such as clearing ditches, handling long timber, etc.). If the locking means comprise a disc brake, the adjustment will include the setting of the maximum actuating force between the brake blocks and the brake disc.

If one or more disc brakes 35 are used for locking means 30, another advantage is that standard components are available for this. Components of disc brakes of trucks may be used, for example. The number of callipers per brake disc may be selected according to the torque to be transmitted (which may amount to tens of kNm, for example): two, but also one, or more than two callipers may be used to position the callipers. Moreover, even two or even more brake discs may also be used.

For certain applications, such as clearing ditches, the brake disc (or brake discs) may be made from a stainless metal.

Fig. 3b illustrates a different embodiment in which callipers 38 are coupled to pivot column 71 of crane 70 and brake disc 36 is coupled to foot 11. In the embodiment illustrated the brake disc has a non-flat form.

The brake blocks may be hydraulically and/or pneumatically and/or electrically and/or electromagnetically pressed against the brake disc.

Instead of a disc brake, other locking means may also be used, e.g. a second hydraulic system, which is preferably independent of the system for driving slewing system 12, or another mechanical locking system known to the person skilled in the art.

Fig. 4 shows a truck 80 in which crane 70 is located between driver's cab 81 and loading platform 82. In another embodiment a tractor is used as the vehicle.

Fig. 5 shows an embodiment of a crane 70 with a pivot column 71 and a grab 95 for handling long timber.

The above description relates to a crane, but it should be understood that the invention relates to mowing machines as well.

## Claims

1. A locking device (10) for locking a slewable arm of a ditch clearer crane or mowing machine (70) which is mountable or mounted on a vehicle (80), wherein the device comprises:
- a foot (11), mountable or mounted on the vehicle in such a manner that the foot is firmly secured to the vehicle;
- a slewable arm, rotatable relative to the foot and driven by a drive (20), thereby causing the slewable arm to rotate;
- a slewing system (12) comprising a continuous slewing ring (12) for the slewable arm;
whereby the device comprises locking means (30, 35) for locking the rotation of the slewing system (12) relative to the foot (11), wherein the locking means (30, 35) are independent of the drive (20) of the slewing system, wherein the locking means (30, 35) comprise a disc brake (35), wherein the disc brake (35) comprises a brake disc (36) and brake blocks (37), and wherein the brake disc (36) is coupled to the slewing system (12) and the brake blocks (37) are coupled to the foot (11) or wherein the brake disc (36) is coupled to the foot (11) and the brake blocks (37) are coupled to the slewing system (12), wherein the slewable arm (70) comprises a pivot column (71) coupled to the slewing system (12),
wherein said brake blocks (37) are comprised within a calliper (38), two or more callipers (38) are coupled to the slewing system (12) or foot (11), respectively, and the locking means (30, 35) comprise more than one disc brakes (35).

2. The device according to Claim 1, wherein two or more brake discs (36) are coupled to the slewing system (12) or foot (11), respectively.

3. The device according to Claim 1 or 2, wherein the slewable arm comprises a pivot column (71) coupled to the slewing system (12) and wherein the brake disc (36) is coupled via the pivot column to the slewing system (12) .

4. The device according to any of Claims 1 to 3, wherein the brake disc (36) is coupled to the foot (11) and the brake blocks (37) are coupled to the slewing system (12) and wherein the slewable arm comprises a pivot column (71) coupled to the slewing system (12), and wherein the brake blocks (37) are coupled via the pivot column (71) to the slewing system (12).

5. The device according to any of Claims 1 to 4, also comprising means for pressing the brake blocks hydraulically and/or pneumatically and/or electrically and/or electromagnetically pressed against the brake disc.

6. The device according to any one of Claims 1 to 5, wherein the slewing system (12) comprises a toothed wheel (13) and wherein the drive (20) comprises at least one gear rack (21) for engaging with the toothed wheel (13).

7. The device according to Claim 6, wherein the drive (20) also comprises a hydraulic system (22) for moving at least one gear rack (21) linearly.

8. A vehicle (80) comprising the device (10) according to any one of Claims 1 to 7.

9. Use of a vehicle comprising a device (10) according to any of claims 1 to 7 for mowing grass.

10. Use of a vehicle comprising a device (10) according to any of claims 1 to 7 for clearing ditches.

## Patentansprüche

1. Eine Arretierungsvorrichtung (10) zum Arretieren eines schwenkbaren Arms eines Grabenreinigungskrans oder einer Mähmaschine (70), der an einem Fahrzeug (80) montierbar oder montiert ist, wobei die Vorrichtung Folgendes umfasst:
- einen Fuß (11), der an dem Fahrzeug derart montierbar oder montiert ist, dass der Fuß fest an dem Fahrzeug gesichert ist,
- einen schwenkbaren Arm, der in Bezug auf den Fuß drehbar ist und von einem Antrieb (20) angetrieben wird, wodurch die Drehung des schwenkbaren Arms bewirkt wird;
- ein Schwenksystem (12), das einen durchgehenden Schwenkring (12) für den schwenkbaren Arm umfasst;
wobei die Vorrichtung Arretierungsmittel (30, 35) zum Arretieren der Drehung des Schwenksystems (12) in Bezug auf den Fuß (11) umfasst, wobei die Arretierungsmittel (30, 35) unabhängig von dem Antrieb (20) des Schwenksystems sind, wobei die Arretierungsmittel (30, 35) eine Scheibenbremse (35) umfassen, wobei die Scheibenbremse (35) eine Bremsscheibe (36) und Bremsklötze (37) umfasst, und wobei die Bremsscheibe (36) mit dem Schwenksystem (12) gekoppelt ist und die Bremsklötze (37) mit dem Fuß (11) gekoppelt sind oder wobei die Bremsscheibe (36) mit dem Fuß (11) gekoppelt ist und die Bremsklötze (37) mit dem Schwenksystem (12) gekoppelt sind, wobei der schwenkbare Arm (70) eine Gelenksäule (71) umfasst, die mit dem Schwenksystem (12) gekoppelt ist,
wobei die Bremsklötze (37) in einer Bremszange (38) enthalten sind, wobei zwei oder mehr Bremszangen (38) mit dem Schwenksystem (12) beziehungsweise dem Fuß (11) gekoppelt sind, und die Arretierungsmittel (30, 35) mehr als eine Scheibenbremse (35) umfassen.

2. Die Vorrichtung nach Anspruch 1, wobei zwei oder mehr Bremsscheiben (36) mit dem Schwenksystem (12) beziehungsweise dem Fuß (11) gekoppelt sind.

3. Die Vorrichtung nach Anspruch 1 oder 2, wobei der schwenkbare Arm eine Gelenksäule (71) umfasst, die mit dem Schwenksystem (12) gekoppelt ist, und wobei die Bremsscheibe (36) über die Gelenksäule mit dem Schwenksystem (12) gekoppelt ist.

4. Die Vorrichtung nach einem der Ansprüche 1 bis 3, wobei die Bremsscheibe (36) mit dem Fuß (11) gekoppelt ist und die Bremsklötze (37) mit dem Schwenksystem (12) gekoppelt sind und wobei der schwenkbare Arm eine Gelenksäule (71) umfasst, die mit dem Schwenksystem (12) gekoppelt ist, und wobei die Bremsklötze (37) über die Gelenksäule (71) mit dem Schwenksystem (12) gekoppelt sind.

5. Die Vorrichtung nach einem der Ansprüche 1 bis 4, außerdem Mittel zum Pressen der Bremsklötze umfassend, die hydraulisch und/oder pneumatisch und/oder elektrisch und/oder elektromagnetisch an die Bremsscheibe gepresst werden.

6. Die Vorrichtung nach einem der Ansprüche 1 bis 5, wobei das Schwenksystem (12) ein Zahnrad (13) umfasst und wobei der Antrieb (20) mindestens eine Zahnstange (21) zum Eingriff mit dem Zahnrad (13) umfasst.

7. Die Vorrichtung nach Anspruch 6, wobei der Antrieb (20) außerdem ein hydraulisches System (22) zum linearen Bewegen mindestens einer Zahnstange (21) umfasst.

8. Ein Fahrzeug (80), die Vorrichtung (10) nach einem der Ansprüche 1 bis 7 umfassend.

9. Verwendung eines Fahrzeugs, das eine Vorrichtung (10) nach einem der Ansprüche 1 bis 7 umfasst, zum Mähen von Gras.

10. Verwendung eines Fahrzeugs, das eine Vorrichtung (10) nach einem der Ansprüche 1 bis 7 umfasst, zum Reinigen von Gräben.

## Revendications

1. Dispositif de verrouillage (10) pour verrouiller un bras pivotant d'une cureuse de fossé ou d'une faucheuse (70) qui est montable ou monté sur un véhicule (80), dans lequel le dispositif comprend :
- un pied (11), montable ou monté sur le véhicule de telle manière que le pied est solidement fixé au véhicule;
- un bras pivotant pouvant tourner par rapport au pied et entraîné par un entraînement (20), amenant ainsi le bras pivotant à pivoter;
- un système d'orientation (12) comprenant une couronne d'orientation continue (12) pour le bras pivotant;
moyennant quoi le dispositif comprend des moyens de verrouillage (30, 35) pour bloquer la rotation du système d'orientation (12) par rapport au pied (11), dans lequel les moyens de verrouillage (30, 35) sont indépendants de l'entraînement (20) du système d'orientation, dans lequel les moyens de verrouillage (30, 35) comprennent un frein à disque (35), dans lequel le frein à disque (35) comprend un disque de frein (36) et des sabots de frein (37), et dans lequel le disque de frein (36) est couplé au système d'orientation (12) et les sabots de frein (37) sont couplés au pied (11) ou dans lequel le disque de frein (36) est couplé au pied (11) et les sabots de frein (37) sont couplés au système d'orientation (12), dans lequel le bras pivotant (70) comprend une colonne de pivotement (71) couplée au système d'orientation (12),
dans lequel lesdits sabots de frein (37) sont compris dans un étrier de frein (38), deux étriers de frein ou plus (38) sont couplés au système d'orientation (12) ou au pied (11), respectivement, et les moyens de verrouillage (30, 35) comprennent plus d'un des freins à disque (35).

2. Dispositif selon la revendication 1, dans lequel deux disques de frein (36) ou plus sont couplés au système d'orientation (12) ou au pied (11), respectivement.

3. Dispositif selon la revendication 1 ou 2, dans lequel le bras pivotant comprend une colonne de pivotement (71) couplée au système d'orientation (12) et dans lequel le disque de frein (36) est couplé par l'intermédiaire de la colonne de pivotement au système d'orientation (12).

4. Dispositif selon l'une quelconque des revendications 1 à 3, dans lequel le disque de frein (36) est couplé au pied (11) et les sabots de frein (37) sont couplés au système d'orientation (12) et dans lequel le bras pivotant comprend une colonne de pivotement (71) couplée au système d'orientation (12), et dans lequel les sabots de frein (37) sont couplés par l'intermédiaire de la colonne de pivotement (71) au système d'orientation (12) .

5. Dispositif selon l'une quelconque des revendications 1 à 4, comprenant en outre des moyens pour presser les sabots de frein de façon hydraulique et/ou pneumatique et/ou électrique et/ou électromagnétique, contre le disque de frein.

6. Dispositif selon l'une quelconque des revendications 1 à 5, dans lequel le système d'orientation (12) comprend une roue dentée (13) et dans lequel l'entraînement (20) comprend au moins une crémaillère (21) pour venir en prise avec la roue dentée (13).

7. Dispositif selon la revendication 6, dans lequel l'entraînement (20) comprend également un système hydraulique (22) pour déplacer au moins une crémaillère (21) de manière linéaire.

8. Véhicule (80) comprenant le dispositif (10) selon l'une quelconque des revendications 1 à 7.

9. Utilisation d'un véhicule comprenant un dispositif (10) selon l'une quelconque des revendications 1 à 7 pour la tonte de l'herbe.

10. Utilisation d'un véhicule comprenant un dispositif (10) selon l'une quelconque des revendications 1 à 7 pour le nettoyage des fossés.
